# FASCICULE DE BREVET EUROPEEN

(11) **EP 2 150 444 B1**
(45) Date de publication et mention de la délivrance du brevet: **17.02.2016**
(21) Numéro de dépôt: 08750042.7
(22) Date de dépôt: 05.05.2008
(51) Int. Cl.: B60S 1/40

(54) **SOCLE DE CONNEXION DESTINE A COOPERER AVEC UN ADAPTEUR POUR FORMER AVEC CELUI-CI UN CONNECTEUR MECANIQUE POUR UN BALAI D ' ESSUIE-GLACE POUR VEHICULE AUTOMOBILE**
MIT ADAPTER INTERAGIERENDE ANSCHLUSSBASIS ZUR BILDUNG EINES MECHANISCHEN VERBINDERS FÜR DAS WISCHBLATT EINES FAHRZEUGES
CONNECTION BASE INTERACTING WITH AN ADAPTER FOR FORMING THEREWITH MECHANICAL CONNECTOR FOR THE WIPER BLADE FOR AN AUTOMOBILE

(30) Priorité: 31.05.2007 FR 0703853
(43) Date de publication de la demande: 10.02.2010
(73) Titulaire: Valeo Systèmes d'Essuyage, 78321 La Verrière (FR)
(72) Inventeur: GRASSO, Giuseppe, F-63340 Le Breuil Sur Couze (FR); BOUSSET, Xavier, F-63115 Mezel (FR)
(86) Numéro de dépôt international: PCT/EP2008/055482
(87) Numéro de publication internationale: WO 2008/145481

(56) Documents cités:
- EP-A- 1 681 216
- WO-A-2006/117308
- FR-A- 2 753 943
- FR-A1- 2 879 986
- US-A1- 2007 067 939

## Description

La présente invention concerne un socle de connexion destiné à coopérer avec un adaptateur pour former avec celui-ci un connecteur mécanique pour un balai d'essuie-glace pour véhicule automobile, un adaptateur conforme, un connecteur formé par le socle et l'adaptateur ainsi qu'un balai d'essuie-glace et un dispositif d'essuyage.

L'invention trouve une application particulièrement avantageuse, mais non exclusive, dans le domaine des systèmes d'essuie-glace de véhicules automobiles. Par rapport aux balais droits majoritairement employés à l'heure actuelle, un balai d'essuie-glace plat présente la particularité d'être dépourvu de structure à palonniers. Cette nouvelle génération de balai d'essuie-glace dispose toujours d'une lame racleuse souple, mais l'armature externe chargée de la supporter est ici remplacée par une structure flexible qui est directement intégrée à la lame.

Par ailleurs, tout comme son homologue droit de l'état de la technique, un balai d'essuie-glace plat comporte des moyens de connexion afin de pouvoir être couplé à tout bras d'actionnement de forme appropriée. On rappellera à cet égard qu'il existe différentes sortes de bras balais, comme par exemple les bras crochets, les bras à axe de pivotement latéral, les bras à clipsage longitudinal, etc.

Quoi qu'il en soit, les balais d'essuie-glace plats présentent aujourd'hui l'inconvénient de ne pas être standardisés, notamment au niveau des moyens de connexion chargés d'assurer leur raccordement. Dans la pratique, il existe ainsi autant de sortes de balais d'essuie-glace plats, qu'il y a de bras-balais différents. De plus, pour une catégorie de balais d'essuie-glace plats donnée, on trouve une pluralité de modes de réalisation différents du fait de la multitude de fabricants présents sur ce marché. Cela explique pourquoi au final, il existe un si grand nombre de balais d'essuie-glace plats intégrant des moyens de connexions spécifiques à un type donné de bras d'actionnement.

Cette offre pléthorique est certes stimulante en termes d'innovations pour les fabricants désireux de se démarquer de leurs concurrents. Mais en contrepartie, la multiplication des références au stade de la production et/ou de la distribution représente un coût significatif. Faute de standardisation, le prix des balais d'essuie-glace plats reste par conséquent beaucoup trop élevé.

On connaît du document WO2006/069648 correspondant au document FR 2 879 969 A1 un socle de connexion selon le préambule de la revendication 1 et des adaptateurs selon le préambule de la revendication 8 appropriés pour ivers type de bras d'actionnement pour attacher une lame d'essuyage plat.

Dans ce document, le socle de connexion comporte d'une part une butée pour recevoir une extrémité d'un adaptateur et d'autre part un bras élastique de verrouillage de l'autre extrémité de l'adaptateur.

La présente invention vise à proposer une alternative à ce type de socle de connexion.

A cet effet, l'invention a pour objet un socle de connexion selon la revendication 1.

L'invention a également pour objet un adaptateur selon la revendication 8.

L'invention a de plus pour objet un connecteur mécanique pour un balai d'essuie-glace pour véhicule automobile, caractérisé en ce qu'il comprend d'une part un socle de connexion tel que défini ci-dessus et d'autre part un adaptateur tel que défini ci-dessus.

Puis, l'invention a pour objet un balai d'essuie-glace plat, caractérise en ce qu'il comprend une lame d'essuyage porté par un socle de connexion tel que défini ci-dessus.

Enfin, l'invention a pour objet un dispositif d'essuyage caractérisé en ce qu'il comprend un balai d'essuie-glace tel que défini ci-dessus et un adaptateur tel que défini ci-dessus relié à un bras d'actionnement d'un mécanisme motorisé d'essuyage.

D'autres avantages et caractéristiques apparaîtront à la lecture de la description de l'invention, ainsi que des dessins annexés sur lesquels :
- la figure 1 montre une vue en perspective un bras d'actionnement ainsi qu'un socle de connexion portant une lame d'essuyage et un adaptateur conforme selon l'invention,
- la figure 2 montre en détail une vue en perspective d'un socle de connexion et d'un adaptateur conforme selon l'invention selon la figure 1,
- la figure 3 montre une vue en perspective de dessous de l'adaptateur de la figure 2,
- les figures 4, 5, 6 et 7 montrent des vues en perspective et de côté d'un socle de connexion avec un adaptateur conforme pour expliquer l'assemblage de l'adaptateur avec le socle de connexion,
- les figures 8 et 9 montrent des vues en perspectives respectivement de dessus et de dessous d'un adaptateur conforme selon un deuxième mode de réalisation,
- les figures 10 et 11 montrent des vues en perspectives respectivement de dessus et de dessous d'un adaptateur selon un troisième mode de réalisation, et
- la figure 12 montre un schéma avec divers bras d'actionnement et les adaptateurs associés pouvant se connecter sur un même socle de connexion selon l'invention.

Sur toutes les figures, les éléments identiques portent les mêmes numéros de référence.

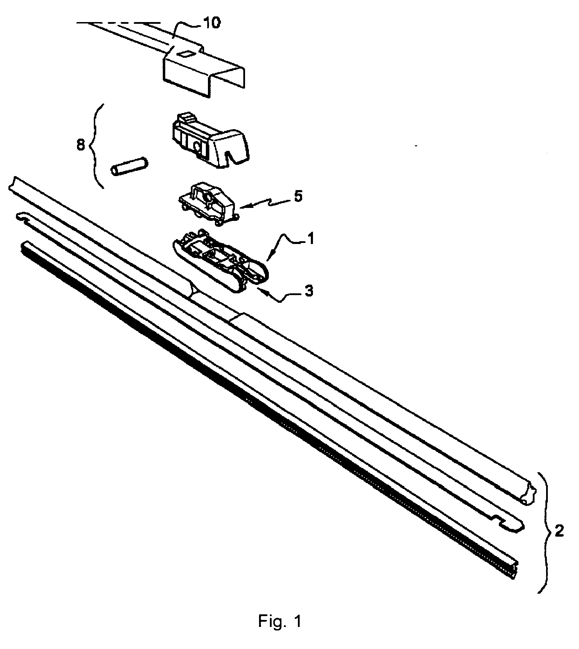

Sur la figure 1 sont représentés d'une part un socle de connexion 1 de forme allongée et destiné à porter une lame d'essuyage 2 dans un canal de maintien 3 traversant longitudinalement le socle 1. Ce socle s'adapte plus particulièrement à un balai d'essuie-glace plat comme celui connu du document WO2006/069648.

Ce socle 1 est destiné à être fixé à un adaptateur 5 présentant également une forme allongée avec une première 7 et une seconde 9 extrémités et apte à être relié, directement ou par l'intermédiaire d'une pièce supplémentaire 8, à un bras d'actionnement 10 pour former avec cet adaptateur un connecteur mécanique pour un balai d'essuie-glace pour véhicule automobile.

Comme on le verra plus loin, pour chaque type d'attache d'un bras d'actionnement, comme par exemple des bras crochets, des bras à axe de pivotement latéral, des bras à clipsage / encliquetage longitudinal, etc. on aura un adaptateur 5 spécifique, mais chacun de ces adaptateurs 5 s'adapte au même socle 1 de connexion par une interface standard. Dans le présent exemple, l'adaptateur est réalisé pour être connecté à un bras d'actionnement à encliquetage longitudinal.

A l'état assemblé, la lame d'essuie-glace, le socle de connexion 1, l'adaptateur 5 et le bras d'actionnement d'un mécanisme motorisé d'essuyage fait partie d'un dispositif d'essuyage des vitres (par exemple pare-brise ou lunette arrière) d'un véhicule automobile.

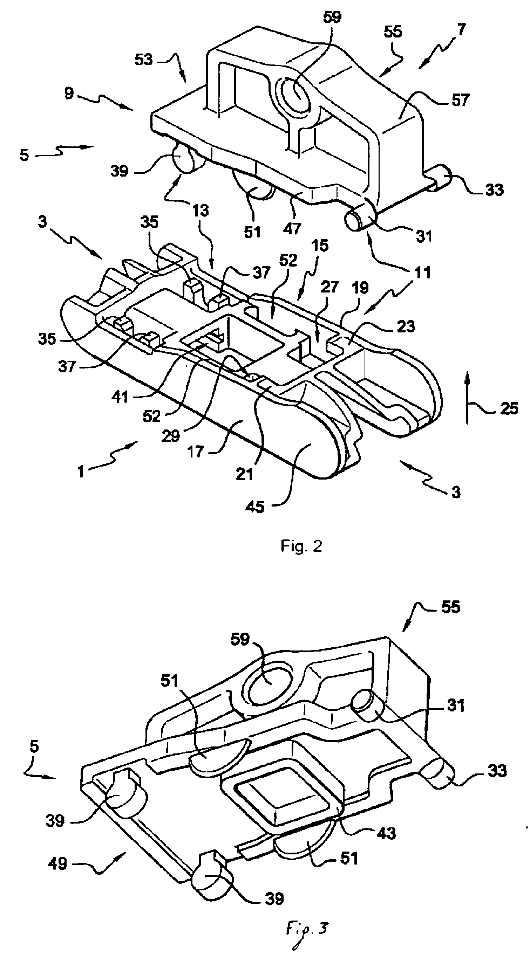

Comme on le voit sur la figure 2, l'adaptateur 5 se fixe sur la face du socle opposée à celle présentant le canal 3 de maintien de la lame d'essuyage.

Pour fixer l'adaptateur 5 sur le socle 1, il est prévu des premières moyens de fixation 11 pour maintenir la première extrémité 7 de l'adaptateur 5 et des second moyens de fixation 13 pour maintenir la seconde extrémité 9 de l'adaptateur 5.

Les premières moyens de fixation 11 comportent dans le socle 1 un guidage linéaire de retenue 15 de la première extrémité 7 de l'adaptateur 5.

Plus spécifiquement, le guidage linéaire de retenue 15 est réalisé d'une part par des portions des jupes latérales 17 et 19 du socle 1 qui vont assurer un guidage latéral de ladite première extrémité 7 et d'autre part par des portions de paroi 21 et 13 perpendiculaires aux jupes 17 et 19 et empêchant un déplacement de ladite première extrémité 7 selon une direction perpendiculaire au plan général défini par ledit socle 1 indiquée par la flèche 25.

Ainsi, les parois de socle 17, 19, 21, 23 sont agencées de manière à former deux canaux d'insertion 27 et 29 aptes à recevoir des parties latérales 31 et 33 associées de la première extrémité 7 de l'adaptateur 5. Ces parties latérales 31 et 33 sont réalisées sous forme d'axes cylindriques.

Les seconds moyens de fixation 13 sont réalisés sous forme de moyens complémentaires de fixation amovible de la seconde extrémité, portés d'une part par l'adaptateur 5 et d'autre part par ledit socle 1.

Plus spécifiquement les moyens complémentaires de fixation amovibles sont formés par des moyens d'encliquetage comprenant par exemple deux bras élastiques 35, 37 en forme de fourche aptes à recevoir un pion associé 39 solidaire de l'adaptateur 5.

Bien qu'une solution avec une seule liaison à encliquetage soit envisageable, le mode préférentiel prévoit, comme cela est représenté sur la figure 2 deux pairs de bras 35, 37 -pion 39. En effet, même si une des liaisons d'encliquetage est défaillante, l'autre peut encore assurer un maintien suffisant entre l'adaptateur 5 et le socle 1.

Par ailleurs, comme les bras 35 et 37 sont prévus à l'intérieur du socle 1, c'est-à-dire entres les jupes latérales 17 et 19, l'encombrement du socle est réduit et ces bras 35 et 37 sont mieux protégés, par exemple contre une cassure.

Avantageusement, le socle 1 comprend en outre une forme de centrage 41 apte à coopérer avec une forme complémentaire 43 de l'adaptateur (voir par exemple sur la figure 2).

Dans le présent exemple de réalisation, cette forme de centrage 41 est réalisée sous forme d'une ouverture carrée dans laquelle une protubérance 43 de forme carrée complémentaire portée par l'adaptateur 5 peut être insérée.

Sur la jupe latérale 17, un emplacement ou logement est prévu pour porter par exemple une pastille de contrôle de l'usure de la lame d'essuyage.

Avantageusement, le socle 1 est réalisé d'une seule pièce en matière plastique, de préférence par injection.

L'adaptateur 5 comprend donc une plaque 47 pourtant sur sa face inférieure 49 (voir figure 3) les pions 39 des moyens d'encliquetage 13, les axes 31 et 33 de la première extrémité 7 coopérant avec les canaux d'insertion 27 et 29 ainsi que le carrée de centrage 43. De plus, on prévoit avantageusement sur cette face intérieure 49 au moins une, de préférence deux protubérances 51 sous forme de demi-disques. Ces demi-disques 51 sont placés de part et d'autre du carrée 43 de centrage et aptes à se loger dans des fentes 53 du socle 1 situées entre une paroi formant l'ouverture de centrage 41 et les jupes latérales 17 et 19. Ainsi, si l'adaptateur n'est pas aligné en face du socle 1, ces demi-disques 51 empêchent l'assemblage de l'adaptateur 5 avec le socle de connexion 1 prévenant ainsi toute détérioration.

Sur sa face supérieure 53, l'adaptateur 5 est surmonté d'une attache 55 pour un bras d'actionnement à encliquetage longitudinale. A cet effet, l'attache 55 comprend une structure 57 avec un trou traversant 59 pour recevoir un axe de pivotement.

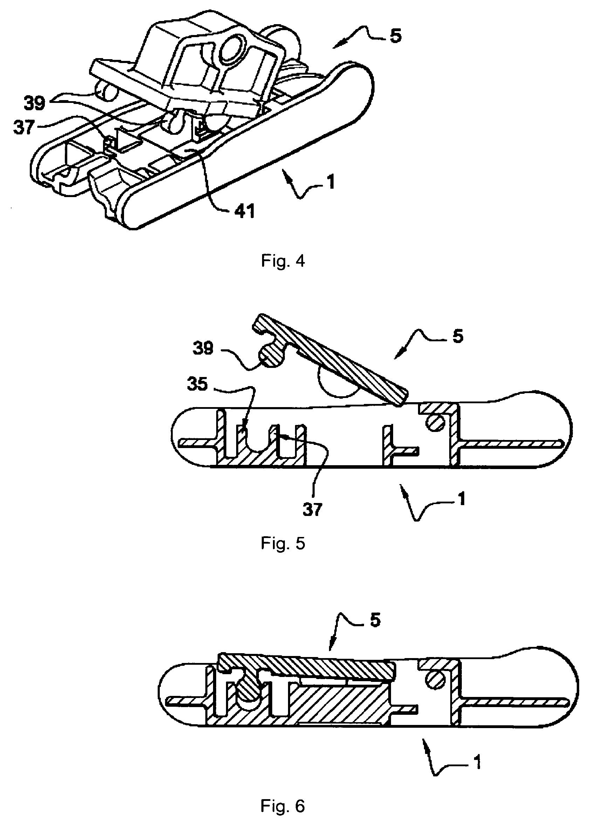

Sur les figures 5 à 8 sont illustrés des étapes pour connecter un adaptateur 5 au socle de connexion 1.

Comme on le voit sur la figure 5, la première extrémité 7 avec ses axes 31 et 33 est introduite dans les canaux d'insertion 27 et 29. Ainsi, les axes 31 et 33 passent en dessous des parois 21 et 23 et sont guidés latéralement par les jupes 17 et 19 du socle de connexion 1. Pour faciliter l'insertion, on introduit l'adaptateur 5 en oblique de manière qu'il fait un angle par rapport au socle de connexion 1.

La figure 6 est une vue en coupe longitudinale du socle 1 et de l'adaptateur 5 dans la même position que celle présentée en perspective à la figure 5.

On constate que les canaux d'insertion 27 et 29 forment un guidage linéaire de retenue de la première extrémité 7 de l'adaptateur, c'est-à-dire que lors de l'insertion, l'extrémité 7 est guidée en translation sur une petite course et grâce aux parois 21 et 23, et elle est retenue par les parois 19 et 21 qui empêchent un déplacement selon une direction perpendiculaire par rapport au plan général défini par le socle 1.

Puis, après l'insertion, on amorce un mouvement de pivotement (figure 6) pour amener les moyens d'encliquetage 13 en vis-à-vis et pour les enclencher par la suite, comme cela est représenté sur la figure 6 qui montre un connecteur mécanique 61 assemblé selon l'invention.

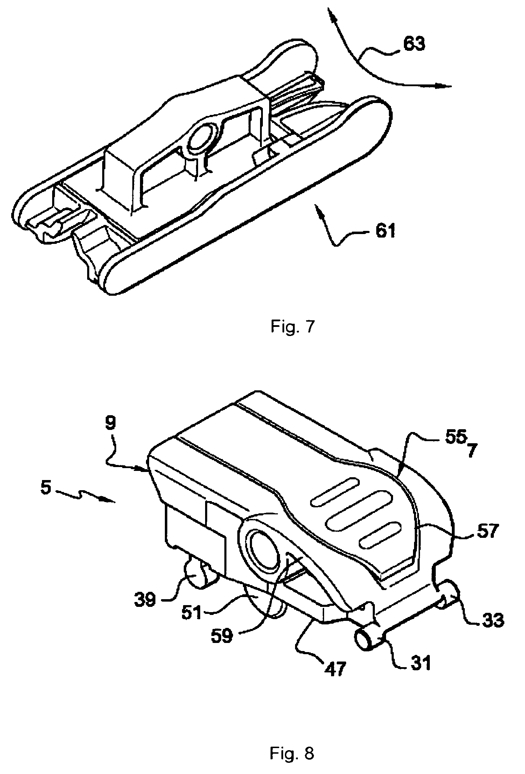

Sur la figure 7, on a indiqué avec la flèche 63 le mouvement de balayage de l'essuie-glace qui est transversal par rapport au connecteur 61. On constate avantageusement que les jupes latérales 17 et 19 sont en contact avec les bords de la plaque 47 pour reprendre les forces transversaux lors du balayage.

Grâce au guidage linéaire, la tenue de l'adaptateur 5 est améliorée. De plus, étant donné que l'extrémité 7 est guidée linéairement, la connexion entre l'adaptateur et le socle est toujours optimale étant donné que ce guidage peut pallier des tolérances par exemple dues à la fabrication ou aux conditions climatiques.

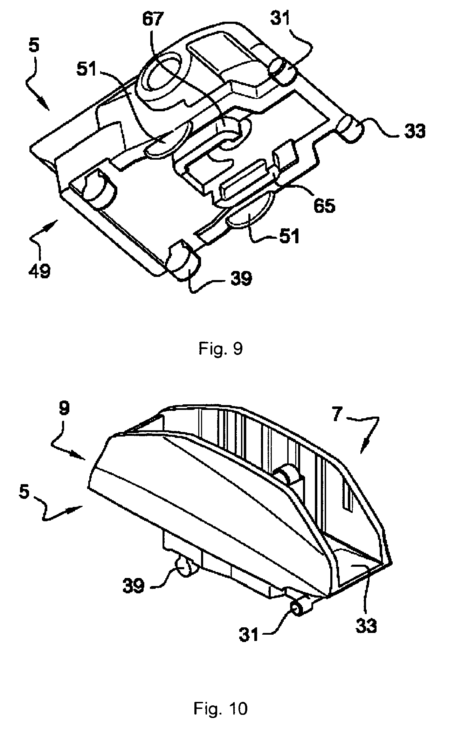

Sur les figures 8 et 9 sont montrées des vues en perspective d'un adaptateur pour un bras à pivotement latéral. Cet adaptateur se distingue plus particulièrement par la structure de l'attache 55 adaptée pour coopérer avec ce type de bras d'actionnement.

De plus, on voit sur la figure 9 que la forme complémentaire 43 pour le centrage de l'adaptateur 5 sur le socle 1 n'est pas formée par un contour complet d'un carré, mais seulement par deux portions 65 et 67 de carré qui sont parallèles à l'étendue longitudinale de l'adaptateur.

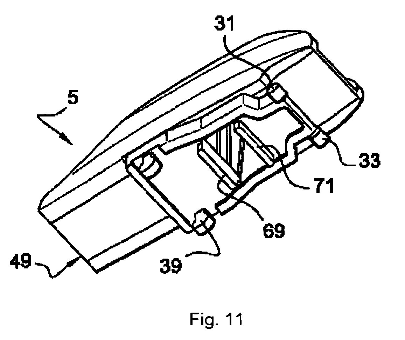

Sur les figures 10 et 11, on a montré des vues en perspective d'un adaptateur pour un bras d'actionnement à crochet.

On voit sur la figure 11 que la forme complémentaire 43 pour le centrage de l'adaptateur 5 sur le socle 1 n'est pas formé par un contour complet d'un carré, mais seulement par deux portions 69 et 71 de carré qui sont transversales à l'étendue longitudinale de l'adaptateur 5.

On comprend que le socle de connexion selon l'invention présente une interface de connexion fiable avec des adaptateurs et permettant une reprise de force améliorée lors du balayage.

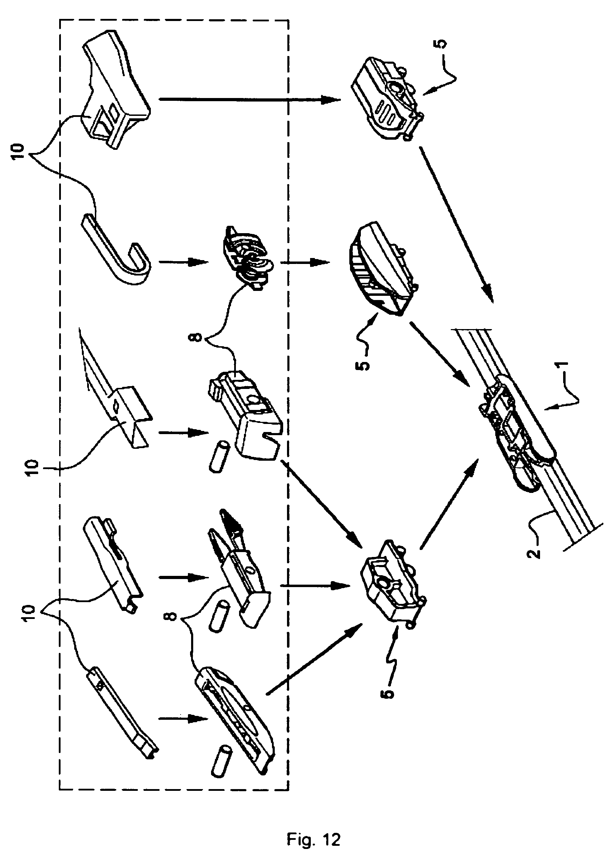

Sur la figure 12, on a représenté un socle de connexion 1 portant une lame d'essuyage plate 2 comme par exemple celle décrite dans WO2006/069648. On a également représenté les trois types adaptateurs 5 des figures précédentes qui s'adaptent directement ou par l'intermédiaire de pièces de forme 8 à les divers types de bras d'actionnement 10 représentés sur une ligne en haut de la figure, à savoir de gauche à droite : trois bras différents à clipsage / encliquetage longitudinale, un bras à crochet et un bras à axe de pivotement latéral.

Ainsi, les lames d'essuyage avec les socles de connexion 1 peuvent être fabriquées comme des pièces standardisées qui s'emploient avec tous les types de bras d'actionnement.

## Revendications

1. Socle de connexion (1) destiné à porter une lame d'essuyage (2) et destiné à être fixé à un adaptateur (5) apte à être relié à un bras d'actionnement (10) pour former avec cet adaptateur (5) un connecteur mécanique (61) pour un balai d'essuie-glace pour véhicule automobile, l'adaptateur (5) présentant une forme allongée avec une première (7) et une seconde (9) extrémités, le socle de connexion (1) comporte un guidage linéaire de retenue (15) de la première extrémité (7) de l'adaptateur et des moyens complémentaires de fixation amovible (13) de la seconde extrémité (9), portés d'une part par l'adaptateur (5) et d'autre part par ledit socle (1), **caractérisé en ce que** le guidage linéaire de retenue (15) est réalisé par des parois de socle (17, 19, 21, 23) agencées de manière à former deux canaux d'insertion (27, 29) aptes à recevoir des parties latérales associées (31, 33) de la première extrémité (7) de l'adaptateur (5), et **en ce que** lesdits moyens complémentaires de fixation amovibles (13) sont formés par des moyens d'encliquetage (35, 37, 39) comprenant deux bras élastiques (35, 37) en forme de fourche aptes à recevoir un pion associé(39), les bras élastiques (35, 37, 39) étant prévus à l'intérieur du socle de connexion (1) entre des jupes latérales (17, 19).

2. Socle de connexion selon la revendication 1, **caractérisé en ce que** chaque canal (27 ; 29) est formé d'une part par une portion de jupe latérale (17 ; 19) du socle assurant un guidage latéral de ladite première extrémité (7) et d'autre part par une portion de paroi (21 ; 23) perpendiculaire à la jupe et empêchant un déplacement de ladite première extrémité (7) selon une direction perpendiculaire (25) au plan général défini par ledit socle.

3. Socle de connexion selon l'une des revendications précédentes, **caractérisé en ce que** les moyens d'encliquetage comprennent deux paires bras-pion (35, 37, 39).

4. Socle de connexion selon l'une quelconque des revendications 1 à 3, **caractérisé en ce qu'**il comprend en outre une forme de centrage (41) apte à coopérer avec une forme complémentaire (43) de l'adaptateur (5).

5. Socle de connexion selon l'une quelconque des revendications 1 à 4, **caractérisé en ce qu'**il comprend un canal de maintien (3) de la lame d'essuyage.

6. Socle de connexion selon l'une quelconque des revendications 1 à 5, **caractérisé en ce qu'**une paroi latérale (17) comporte un logement (45) d'une pastille de contrôle de l'usure de la lame d'essuyage.

7. Socle de connexion selon l'une quelconque des revendications 1 à 6, **caractérisé en ce qu'**il est réalisé d'une seule pièce en matière plastique.

8. Adaptateur (5) apte à être relié d'une part à un bras d'actionnement (10) d'essuyage et d'autre part à un socle de connexion (1) portant une lame d'essuyage (2) pour former avec ce socle (1) de connexion un connecteur mécanique (61) pour un balai d'essuie-glace pour véhicule automobile, l'adaptateur (5) présentant une forme allongée avec une première (7) et une seconde (9) extrémités, la première extrémité (7) présente des extrémités latérales (31, 33) réalisées sous forme d'axes cylindriques destinés à coopérer avec un guidage linéaire de retenu (27, 29) du socle de connexion et des moyens complémentaires (13) de fixation amovible de la seconde extrémité à l'égard du socle, portés d'une part par l'adaptateur (5) et d'autre part par ledit socle (1), lesdits moyens complémentaires de fixation amovibles (13) sont formés par des moyens d'encliquetage (35, 37, 39), **caractérisé en ce que** les moyens d'encliquetage comprennent au moins un pion (39) apte à coopérer avec deux bras élastiques (35, 37) en forme de fourche.

9. Adaptateur selon la revendication 10, **caractérisé en ce que** les moyens d'encliquetage comprennent deux paires bras-pion (35, 37, 39).

10. Adaptateur selon l'une quelconque des revendications 8 à 9, **caractérisé en ce qu'**il comprend au moins une protubérance (51) empêchant l'assemblage de l'adaptateur (5) avec ledit socle de connexion (1) lorsque les moyens complémentaires de fixation amovible (13) ne sont pas correctement alignés.

11. Connecteur mécanique (61) pour un balai d'essuie-glace pour véhicule automobile, **caractérisé en ce qu'**il comprend d'une part un socle (1) selon l'une quelconque des revendications 1 à 7 et d'autre part un adaptateur (5) selon l'une quelconque des revendications 8 à 10.

12. Balai d'essuie-glace plat, **caractérise en ce qu'**il comprend une lame d'essuyage (2) porté par un socle de connexion (1) selon l'une quelconque des revendications 1 à 7.

13. Dispositif d'essuyage **caractérisé en ce qu'**il comprend un balai d'essuie-glace selon la revendication 12 et un adaptateur (5) selon l'une quelconque des revendications 8 à 10 relié à un bras d'actionnement (10) d'un mécanisme motorisé d'essuyage.

## Patentansprüche

1. Anschlussbasis (1), die dazu bestimmt ist, einen Wischgummi (2) zu tragen, und die dazu bestimmt ist, an einem Adapter (5) befestigt zu sein, der geeignet ist, mit einem Betätigungsarm (10) verbunden zu werden, um mit dem Adapter (5) einen mechanischen Verbinder (61) für ein Wischblatt für ein Kraftfahrzeug zu bilden, wobei der Adapter (5) eine längliche Form mit einem ersten (7) und einem zweiten (9) Ende aufweist, wobei die Anschlussbasis (1) eine lineare Rückhalteführung (15) des ersten Endes (7) des Adapters und ergänzende abnehmbare Befestigungsmittel (13) des zweiten Endes (9) umfasst, die einerseits von dem Adapter (5) und andererseits von der Basis (1) getragen werden, **dadurch gekennzeichnet, dass** die lineare Rückhalteführung (15) von Wänden (17, 19, 21, 23) der Basis hergestellt ist, die derart angeordnet sind, dass sie zwei Einfügekanäle (27, 29) bilden, die geeignet sind, um dazugehörende seitliche Teile (31, 33) des ersten Endes (7) des Adapters (5) aufzunehmen, und dadurch, dass die ergänzenden abnehmbaren Befestigungsmittel (13) durch Einrastmittel (35, 37, 39) ausgebildet sind, die zwei elastische Arme (35, 37) in Gabelform umfassen, die geeignet sind, einen dazugehörenden Stift (39) aufzunehmen, wobei die elastischen Arme (35, 37, 39) im Inneren der Anschlussbasis (1) zwischen seitlichen Schürzen (17, 19) vorgesehen sind.

2. Anschlussbasis nach Anspruch 1, **dadurch gekennzeichnet, dass** jeder Kanal (27; 29) einerseits durch einen Abschnitt einer seitlichen Schürze (17; 19) der Basis, der eine seitliche Führung des ersten Endes (7) sicherstellt, und andererseits durch einen Wandabschnitt (21; 23) senkrecht zu der Schürze ausgebildet ist, der eine Bewegung des ersten Endes (7) entlang einer Richtung (25) senkrecht zu der allgemeinen Ebene, die von der Basis definiert wird, verhindert.

3. Anschlussbasis nach einem der vorhergehenden Ansprüche, **dadurch gekennzeichnet, dass** die Einrastmittel zwei Paare Arm-Stifte (35, 37, 39) umfassen.

4. Anschlussbasis nach einem der Ansprüche 1 bis 3, **dadurch gekennzeichnet, dass** sie außerdem eine Zentrierungsform (41) umfasst, die geeignet ist, mit einer komplementären Form (43) des Adapters (5) zusammenzuwirken.

5. Anschlussbasis nach einem der Ansprüche 1 bis 4, **dadurch gekennzeichnet, dass** sie einen Haltekanal (3) des Wischgummis umfasst.

6. Anschlussbasis nach einem der Ansprüche 1 bis 5, **dadurch gekennzeichnet, dass** eine Seitenwand (17) eine Aufnahme (45) einer Kontrollpastille der Abnutzung des Wischgummis umfasst.

7. Anschlussbasis nach einem der Ansprüche 1 bis 6, **dadurch gekennzeichnet, dass** sie aus einem einzigen Teil aus Plastik hergestellt ist.

8. Adapter (5), der geeignet ist, einerseits mit einem Wischbetätigungsarm (10) und andererseits mit einer Anschlussbasis (1), die einen Wischgummi (2) trägt, verbunden zu werden, um mit dieser Anschlussbasis (1) einen mechanischen Verbinder (61) für ein Wischblatt für ein Kraftfahrzeug zu bilden, wobei der Adapter (5) eine längliche Form mit einem ersten (7) und einem zweiten (9) Ende aufweist, wobei das erste Ende (7) seitliche Enden (31, 33), die in Form zylindrischer Achsen hergestellt sind, die dazu bestimmt sind, mit einer linearen Rückhalteführung (27, 29) der Anschlussbasis zusammenzuwirken, und ergänzende abnehmbare Befestigungsmittel (13) des zweiten Endes in Bezug zu der Basis aufweist, die einerseits von dem Adapter (5) und andererseits von der Basis (1) getragen werden, wobei die ergänzenden abnehmbaren Befestigungsmittel (13) durch Einrastmittel (35, 37, 39) ausgebildet sind, **dadurch gekennzeichnet, dass** die Einrastmittel mindestens einen Stift (39) umfassen, der geeignet ist, um mit zwei elastischen Armen (35, 37) in Gabelform zusammenzuwirken.

9. Adapter nach Anspruch 10, **dadurch gekennzeichnet, dass** die Einrastmittel zwei Paare Arm-Stifte (35, 37, 39) umfassen.

10. Adapter nach einem der Ansprüche 8 bis 9, **dadurch gekennzeichnet, dass** er mindestens einen Vorsprung (51) umfasst, der das Zusammenfügen des Adapters (5) mit der Anschlussbasis (1) verhindert, wenn die ergänzenden abnehmbaren Befestigungsmittel (13) nicht korrekt ausgerichtet sind.

11. Mechanischer Verbinder (61) für ein Wischblatt für ein Kraftfahrzeug, **dadurch gekennzeichnet, dass** er einerseits eine Basis (1) nach einem der Ansprüche 1 bis 7 und andererseits einen Adapter (5) nach einem der Ansprüche 8 bis 10 umfasst.

12. Flaches Wischblatt, **dadurch gekennzeichnet, dass** es einen Wischgummi (2) umfasst, der von einer Anschlussbasis (1) nach einem der Ansprüche 1 bis 7 getragen wird.

13. Wischvorrichtung, **dadurch gekennzeichnet, dass** sie ein Wischblatt nach Anspruch 12 und einen Adapter (5) nach einem der Ansprüche 8 bis 10, der mit einem Betätigungsarm (10) eines motorisierten Wischmechanismus verbunden ist, umfasst.

## Claims

1. Connection base (1) intended to bear a wiper blade rubber (2) and intended to be fixed to an adapter (5) able to be connected to an actuating arm (10) in order with this adapter (5) to form a mechanical connector (61) for a windscreen wiper for a motor vehicle, the adapter (5) having an elongate shape with a first (7) and second (9) end, the connection base (1) comprises a retention linear guide (15) for the first end (7) of the adapter and complementary removable-fixing means (13) for the second end (9), these being borne on the one hand by the adapter (5) and on the other hand by the said base (1), **characterized in that** the retention linear guide (15) is created by base walls (17, 19, 21, 23) arranged in such a way as to form two insertion passages (27, 29) able to accept associated lateral parts (31, 33) of the first end (7) of the adapter (5), **and in that** the said complementary removable-fixing means (13) are formed by clip-fastening means (35, 37, 39) comprising two fork-shaped elastic arms (35, 37) able to accept an associated peg (39), the elastic arms (35, 37, 39) being provided inside the connection base (1) between lateral flanges (17, 19).

2. Connection base according to Claim 1, **characterized in that** each passage (27; 29) is formed on the one hand by a lateral flange portion (17; 19) of the base providing lateral guidance for the said first end (7) and, on the other hand, by a wall portion (21; 23) perpendicular to the flange and preventing the said first end (7) from moving in a direction (25) perpendicular to the overall plane defined by the said base.

3. Connection base according to one of the preceding claims, **characterized in that** the clip-fastening means comprise two arm-peg pairs (35, 37, 39).

4. Connection base according to any one of Claims 1 to 3, **characterized in that** it further comprises a centring shape (41) able to collaborate with a complementary shape (43) of the adapter (5).

5. Connection base according to any one of Claims 1 to 4, **characterized in that** it comprises a wiper blade rubber retaining passage (3).

6. Connection base according to any one of Claims 1 to 5, **characterized in that** a lateral wall (17) comprises a housing (45) for an insert for checking wiper blade rubber wear.

7. Connection base according to any one of Claims 1 to 6, **characterized in that** it is made as a single piece out of plastic.

8. Adapter (5) that can be connected on the one hand to a wiper actuating arm (10) and on the other hand to a connection base (1) bearing a wiper blade rubber (2) in order to form with this connection base (1) a mechanical connector (61) for a windscreen wiper for a motor vehicle, the adapter (5) having an elongate shape with a first (7) and second (9) end, the first end (7) has lateral ends (31, 33) produced in the form of cylindrical spigots intended to collaborate with a retention linear guide (27, 29) holding the connection base and complementary removable-fixing means (13) of the second end with respect to the base, which are borne on the one hand by the adapter (5) and on the other hand by the said base (1), the said complementary removable-fixing means (13) are formed by clip-fastening means (35, 37, 39), **characterized in that** the clip-fastening means comprise at least one peg (39) able to collaborate with two fork-shaped elastic arms (35, 37).

9. Adapter according to Claim 10, **characterized in that** the clip-fastening means comprise two arm-peg pairs (35, 37, 39).

10. Adapter according to any one of Claims 8 and 9, **characterized in that** it comprises at least one protuberance (51) preventing the adapter (5) from being assembled with the said connection base (1) when the complementary removable-fixing means (13) are not correctly aligned.

11. Mechanical connector (61) for a windscreen wiper for a motor vehicle, **characterized in that** it comprises on the one hand a base (1) according to any one of Claims 1 to 7 and, on the other hand, an adapter (5) according to any one of Claims 8 to 10.

12. Flat windscreen wiper blade, **characterized in that** it comprises a blade rubber (2) borne by a connection base (1) according to any one of Claims 1 to 7.

13. Wiper device, **characterized in that** it comprises a wiper blade according to Claim 12 and an adapter (5) according to any one of Claims 8 to 10 connected to an actuating arm (10) of a motorised wiper mechanism.
